(19) Europäisches Patentamt
European Patent Office
Office européen des brevets

(11) EP 3 334 795 B1

(12) EUROPEAN PATENT SPECIFICATION

(45) Date of publication and mention of the grant of the patent:
**03.07.2019 Bulletin 2019/27**

(21) Application number: **16754074.9**

(22) Date of filing: **10.08.2016**

(51) Int Cl.:
***C09J 4/06** (2006.01)* ***C08F 220/30** (2006.01)*
***C08K 5/55** (2006.01)*

(86) International application number:
**PCT/US2016/046291**

(87) International publication number:
**WO 2017/027561 (16.02.2017 Gazette 2017/07)**

(54) **TWO-PART ADHESIVE COMPRISING PHENOXYETHYL METHACRYLATE AND TETRAHYDROFURFURYL METHACRYLATE. STRUCTURE INCLUDING CURED MATERIAL THEREOF**

ZWEI-KOMPONENTEN-KLEBSTOFF MIT PHENOXYETHYLMETHACRYLAT UND TETRAHYDROFURFURYLMETHACRYLAT STRUKTUR MIT GEHÄRTETEM MATERIAL DARAUS

ADHÉSIF BICOMPOSANT COMPRENANT DU MÉTHACRYLATE DE PHÉNOXYÉTHYLE ET DU MÉTHACRYLATE DE TÉTRAHYDROFURFURYLE ET STRUCTURE COMPRENANT UN MATÉRIAU DURCI CONSTITUÉ DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2015 JP 2015159489**

(43) Date of publication of application:
**20.06.2018 Bulletin 2018/25**

(73) Proprietor: **3M Innovative Properties Company**
**Saint Paul, Minnesota 55133-3427 (US)**

(72) Inventor: **IRIE, Shinichi**
**Shinagawa-ku**
**Tokyo 141-8684 (JP)**

(74) Representative: **Herzog, Fiesser & Partner Patentanwälte PartG mbB**
**Isartorplatz 1**
**80331 München (DE)**

(56) References cited:
**WO-A1-99/64528**
**WO-A1-2014/140138**
**US-A1- 2013 267 670**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 334 795 B1

## Description

FIELD OF THE DISCLOSURE

The present disclosure relates to a two-part adhesive and a structure including a cured material thereof and particularly relates to a reactive two-part adhesive for a poorly-adhesive substrate such as a substrate including a silicone rubber.

BACKGROUND

An efficient and effective means of adhering a poorly-adhesive substrate such as a silicone rubber by an adhesive is in demand.

In a situation of adhering such a poorly-adhesive substrate, a surface treatment such as a flame treatment, an ITRO treatment, a corona discharge, a plasma treatment, oxidation by ozone or an oxidizing acid, or sputter etching is often necessary. While a surface of the poorly-adhesive substrate may be covered using a primer including a high-surface-energy material, the above surface treatment is sometimes necessary to cause the primer to adhere sufficiently. In this manner, adhesion of the poorly-adhesive substrate often requires a complex and expensive treatment, and even if such a treatment is applied, a sufficient adhesive force may not be obtained.

It is known that a reactive two-part adhesive configured from an initiator (curing agent) including an organoborane, which is an aerobic initiator that acts under a presence of air or oxygen, and a main agent including a (meth)acrylic monomer exhibits an excellent adhesive force on a poorly-adhesive substrate such as polypropylene.

Patent literature 1 (JP 2002-517594B) describes "a polymerizable composition for being used together with an aerobic initiator, including: a first ethylenically-unsaturated monomer; and a second ethylenically-unsaturated monomer; wherein the monomer blend has an average boiling point of at least about 160°C and an average monomer fluorophilicity of at least 3.25, and the polymerizable composition can polymerize and become a polymer having a glass transition temperature of at least about -20°C." WO 99/64528, US 2013/267670 and WO 2014/140138 describe various two-part acrylic adhesives used for bonding low surface energy substrates.

SUMMARY

Technical Problem

Silicone rubber excels in heat resistance, cold resistance, chemical resistance, weather resistance, electrical insulation, and the like; because a temperature dependence of mechanical properties thereof is low that is, there is little change in the mechanical properties across a comparatively wide temperature range it is also suited for use in cold climates and hot climates. Because of this, silicone rubber is used suitably in various special uses where a general polymeric elastomer cannot be applied. However, it is difficult to perform adhesion of a silicone rubber substrate without using an adhesive including a special material having chemical properties similar to silicone rubber for example, an acrylic-modified silicone resin.

The present disclosure provides a two-part adhesive that enables adhesion in a wide temperature range near room temperature and exhibits an excellent adhesion strength on a poorly-adhesive substrate including a silicone rubber.

SOLUTION TO PROBLEM

According to an embodiment of the present disclosure, provided is a two-part adhesive, including: a main agent including phenoxyethyl methacrylate and tetrahydrofurfuryl methacrylate; and an initiator including an organoborane; wherein the main agent includes the phenoxyethyl methacrylate at 60 to 95% by mass with reference to a mass of a polymerizable component.

According to another embodiment of the present disclosure, provided is a structure, including: a first silicone rubber substrate; a second substrate; and a cured material of the above two-part adhesive; wherein the structure is made by the first silicone rubber substrate and the second substrate being joined via the cured material of the two-part adhesive.

ADVANTAGEOUS EFFECTS OF INVENTION

According to the present disclosure, a two-part adhesive that enables adhesion in a wide temperature range near room temperature and exhibits an excellent adhesion strength on a poorly-adhesive substrate, particularly a silicone rubber substrate, can be obtained.

Note that the description given above should not be deemed as disclosing all embodiments of the present invention and all advantages relating to the present invention.

BRIEF DESCRIPTION OF DRAWINGS

FIG.1 is a cross-sectional view of a structure of an embodiment of the present disclosure.

MODE FOR CARRYING OUT THE INVENTION

A more detailed description is given below with an object of illustrating representative embodiments of the present invention; however, the present invention is not limited to these embodiments.
In the present disclosure, "(meth)acryl" signifies "acryl" or "methacryl" and "(meth)acrylate" signifies "acrylate" or "methacrylate."
In the present disclosure, "polymerizable component" signifies another (meth)acrylic monomer or oligomer, another polymerizable monomer or oligomer, or another component that can react or is polymerizable with phenoxyethyl methacrylate and tetrahydrofurfuryl methacrylate included as necessary in a main agent and/or an initiator in addition to phenoxyethyl methacrylate and tetrahydrofurfuryl methacrylate included in the main agent. When "polymerizable component" is used in relation to parts by mass, "polymerizable component" signifies a total amount of this component.
A two-part adhesive of an embodiment of the present disclosure includes a main agent and an initiator. The main agent includes phenoxyethyl methacrylate and tetrahydrofurfuryl methacrylate. The initiator includes an organoborane, which is an aerobic initiator. The main agent of the two-part adhesive includes the phenoxyethyl methacrylate at 60 to 95% by mass with reference to a mass of a polymerizable component. By using as the polymerizable component phenoxyethyl methacrylate and tetrahydrofurfuryl methacrylate, whose polymerization reactivities are lower than an acrylate, and controlling a polymerization rate, a polymerization degree of a polymer can be increased to impart a necessary cohesion to a cured material of the adhesive while causing the adhesive to sufficiently permeate a substrate. While not bound to any theory, it is thought that an adhesive force of the two-part adhesive of the present disclosure on a poorly-adhesive substrate is due to an anchoring action of the adhesive that permeates the substrate. Particularly, it is thought that, with a silicone rubber substrate, performing adhesion using an anchoring action is difficult because a surface thereof is comparatively soft; however, the two-part adhesive of the present disclosure, which includes as an essential component a combination of phenoxyethyl methacrylate and tetrahydrofurfuryl methacrylate, excels in permeation of a poorly-adhesive substrate, particularly a silicone rubber substrate, and can exhibit high adhesion strength.
In several embodiments, the main agent includes phenoxyethyl methacrylate at 65% by mass or more or 70% by mass or more and 90% by mass or less or 85% by mass or less with reference to the mass of the polymerizable component. By making a content of phenoxyethyl methacrylate be in the above range, a high adhesive force can be obtained while further widening a range of a curing temperature near room temperature.
Because phenoxyethyl methacrylate and tetrahydrofurfuryl methacrylate have high boiling points (phenoxyethyl methacrylate: 270°C, tetrahydrofurfuryl methacrylate: 225°C), odor generation when working can be prevented or suppressed.
In several embodiments, the main agent includes tetrahydrofurfuryl methacrylate at 5% by mass or more, 10% by mass or more, or 20% by mass or more and 40% by mass or less, 35% by mass or less, or 30% by mass or less with reference to the mass of the polymerizable component. By making a content of tetrahydrofurfuryl methacrylate be in the above range, a high adhesive force can be obtained while further widening the range of the curing temperature near room temperature.
The main agent may further include another (meth)acrylic monomer or oligomer as an optional component. As such a (meth)acrylic monomer or oligomer, for example, a linear or branched alkyl (meth)acrylate where a carbon number of an alkyl moiety is 1 to about 12, 1 to about 8, or 1 to about 4-for example, methyl (meth)acrylate, ethyl (meth)acrylate, butyl (meth)acrylate, n-hexyl (meth)acrylate, 2-ethylhexyl (meth)acrylate, isooctyl (meth)acrylate, or isodecyl (meth)acrylate; a (meth)acrylic acid ester of a monohydric alcohol including a hetero atom for example, 2-ethyoxyethyl (meth)acrylate; a partial or complete ester of a polyhydric alcohol and (meth)acrylic acid for example, ethylene glycol, diethylene glycol, polyethylene glycol, trimethylol propane, triethylene glycol, tetraethylene glycol, dipropylene glycol, tripropylene glycol, tetrapropylene glycol, pentapropylene glycol, polypropylene glycol, ethoxylated or propoxylated diphenylol propane, a (meth)acrylic acid ester of hydroxy-terminated polyurethane, or an aliphatic polyester urethane (meth)acrylate; and the like can be mentioned. In a situation of using this (meth)acrylic monomer or oligomer, the (meth)acrylic monomer or oligomer is used in an amount of, for example, about 0.1% by mass or more, about 1% by mass or more, or about 2% by mass or more and about 20% by mass or less, about 10% by mass or less, and about 5% by mass or less with reference to the mass of the polymerizable component.
A linear or branched alkyl (meth)acrylate with a large carbon number may decrease the cohesion and an interfacial adhesion of the cured material of the adhesive due to a low Tg of a homopolymer thereof; therefore, in several

embodiments, the main agent does not include a linear or branched alkyl (meth)acrylate where a carbon number of an alkyl moiety is 5 or more.

The main agent may include as an optional component yet another polymerizable monomer or oligomer for example, vinyl acetate; vinyl chloride; vinyl fluoride; vinyl bromide; styrene; dibehenyl benzene; a crotonic acid ester; a maleic acid ester; a styrenated unsaturated polyester resin; N,N-dimethyl acrylamide; a nitrogen-containing polymerizable monomer such as N,N-diethyl acrylamide, N-t-butyl acrylamide, N-(acryloyl)morpholine, N-(acryloyl)piperidine; or a combination thereof. This polymerizable monomer or oligomer can be used in an amount that does not remarkably affect desired characteristics of the cured material of the adhesive.

In several embodiments, the main agent includes phenoxyethyl methacrylate and tetrahydrofurfuryl methacrylate at about 95% by mass or more, about 97% by mass or more, or about 99% by mass or more in total with reference to the mass of the polymerizable component. In a certain embodiment, the polymerizable component includes phenoxyethyl methacrylate and tetrahydrofurfuryl methacrylate.

In several embodiments, a fluorophilicity of the polymerizable component of the main agent is 0.1 or more, 0.3 or more, or 0.5 or more 1.4 or less, 1.2 or less, or 1.0 or less. It is generally thought that a higher fluorophilicity of the polymerizable component of the main agent that is, a lower polarity of the polymerizable component of the main agent is advantageous in the adhesive wetting and permeating a surface of a low-surface-energy substrate; however, unexpectedly, the adhesives of these embodiments of the present disclosure, despite an extremely low fluorophilicity of the polymerizable component of the main agent, exhibit an excellent adhesive force on a low-surface-energy substrate such as a fluororesin or a silicone rubber, particularly a silicone rubber substrate.

Fluorophilicity Procedure: The fluorophilicity of the polymerizable component can be calculated by determining fluorophilicities of individual monomers configuring the polymerizable component and using the following formula: $\varphi_{blend} = \sum(X_n \cdot \varphi_n)$ (in the formula, $\varphi_{blend}$ is the fluorophilicity of the polymerizable component, $X_n$ is a mass fraction of the individual monomers relative to a total mass of the polymerizable component, and $\varphi_n$ is a fluorophilicity of an individual monomer). The fluorophilicities of the individual monomers are determined by a miscibility of the monomer in a fluorocarbon blend including at various ratios perfluorinated octane (product name: FLUORINERT (registered trademark) FC-75; 3M Company, St. Paul, MN, United States) and 1H,1H-perfluorooctyl methacrylate (product name: FOMA; Polysciences, Inc., Warrington, PA, United States). Specifically, 0.5 mL of the monomer and 1 mL of the fluorocarbon blend are prepared and left standing for about 2 hours at room temperature (about 22 to about 25°C). "Miscibility" is determined according to whether overall phase separation that can be visually confirmed arises at room temperature (about 22 to about 25°C). Table I indicates grades of fluorophilicity and compositions of fluorocarbon blends corresponding to these grades. Table II indicates representative values of fluorophilicity of the individual monomers together with approximate glass transition temperatures Tg (°C) and boiling points (°C) of homopolymers thereof.

Table I

| Fluorophilicity of Monomer | Composition of Fluorocarbon Blend into which Monomer is Mixed FC - 75 : FOMA (Volume Ratio) |
|---|---|
| 9 | 100 : 0 |
| 8 | 87.5 : 12.5 |
| 7 | 75 : 25 |
| 6 | 62.5 : 37.5 |
| 5 | 50 : 50 |
| 4 | 37.5 : 62.5 |
| 3 | 25 : 75 |
| 2 | 12.5 : 87.5 |
| 1 | 0 : 100 |
| 0 | Nonmiscible at all ratios |

Table II

| Monomer | Fluorophilicity | Tg (°C) | Boiling (°C) |
|---|---|---|---|
| Methyl methacrylate | 5 | 105 | 100 |

(continued)

| Monomer | Fluorophilicity | Tg (°C) | Boiling (°C) |
|---|---|---|---|
| t-butyl acrylate | 6 | 41 | 120 |
| t-butyl methacrylate | 6 | 107 | 140 |
| n-butyl acrylate | 5 | -54 | 145 |
| Isobutyl methacrylate | 6 | 73 | 155 |
| Methacrylic acid | 5 | 185 | 161 |
| n-butyl methacrylate | 5 | 20 | 164 |
| Cyclohexyl acrylate | 3 | 15 | 184 |
| 2-methoxyethyl methacrylate | 4 | 16 | 190 |
| n-hexyl acrylate | 4 | -45 | 190 |
| 1H,1H-perfluorooctyl methacrylate | 9 | 60 | 200 |
| Cyclohexyl methacrylate | 4 | 66 | 210 |
| n-hexyl methacrylate | 3 | -5 | 210 |
| Isooctyl acrylate | 4 | -99 | 215 |
| 2-ethylhexyl acrylate | 4 | -50 | 217 |
| 2-hydroxyethyl methacrylate | 0 | 55 | 220 |
| Tetrahydrofurfuryl acrylate | 1 | -12 | 220 |
| Tetrahydrofurfuryl methacrylate | 3 | 60 | 225 |
| Benzyl acrylate | 1 | 6 | 228 |
| 2-ethylhexyl methacrylate | 4 | -10 | 229 |
| Benzyl methacrylate | 1 | 54 | 230 |
| 2-cyanoethyl acrylate | 0 | 4 | 235 |
| Isobornyl acrylate | 4 | 94 | 245 |
| 2-(2-ethoxyethoxy)ethyl acrylate | 1 | -70 | 250 |
| Isobornyl methacrylate | 3 | 110 | 255 |
| 2-phenoxyethyl methacrylate | 0 | 54 | 270 |
| Isodecyl methacrylate | 3 | -30 | 275 |
| Lauryl acrylate | 1 | -3 | 310 |
| Lauryl methacrylate | 1 | -55 | 320 |
| 2-phenoxyethyl acrylate | 0 | -22 | 325 |

The initiator includes an organoborane. The organoborane initiates free-radical polymerization of monomers having polymerizability and generates a polymer necessary for functioning as an adhesive. The organoborane can be represented by the following general formula:

[Formula 1]

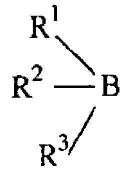

In the formula, $R^1$ is an alkyl group of a carbon number of 1 to about 10; $R^2$ and $R^3$ may be the same or different and are independently selected from alkyl groups of a carbon number of 1 to about 10 and aryl groups of a carbon number of 6 to 10. Preferably, $R^1$, $R^2$, and $R^3$ are independently selected from alkyl groups having a carbon number of 1 to about 5. $R^1$, $R^2$, and $R^3$ may all be different, or two or more among $R^1$, $R^2$, and $R^3$ may be the same. The initiator is formed by $R^1$, $R^2$, and $R^3$ and a boron atom (B) to which these are bonded becoming one. As specific organoboranes, for example, trimethyl borane, triethyl borane, tri-n-propyl borane, triisopropyl borane, tri-n-butyl borane, triisobutyl borane, and tri-sec-butyl borane can be mentioned.

The organoborane can be stabilized by complexing with a complexing agent. An organoborane complex can be represented by the following general formula:

[Formula 2]

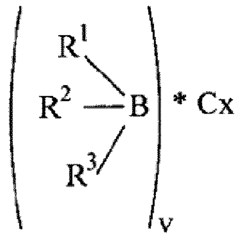

In the formula, $R^1$, $R^2$, and $R^3$ are as described above, and Cx is the complexing agent.

As useful complexing agents (Cx), for example, an amine complexing agent, an amidine complexing agent, a hydroxide complexing agent, and an alkoxide complexing agent can be mentioned. A ratio in the complex of the boron atom to the complexing agent (Cx) is represented by "v" and is preferably selected so the complexing agent and the boron atom are at an effective ratio. A ratio in the complex of the boron atom and a complexing moiety of the complexing agent is preferably about 1:1. When the ratio of the boron atom and the complexing moiety of the complexing agent exceeds 1:1, that is, when the boron atom becomes of an excess amount relative to the complexing moiety of the complexing agent, a free organoborane with an inclination of having pyrophoricity may arise.

As the amine complexing agent, various compounds having at least one amino group or a mixture thereof can be used. The amine complexing agent may be a monoamine or a polyamine (that is, a compound having two or more amino groups for example, two to four amino groups). Because with a polyamine a plurality of amino groups can each function as a complexing moiety, two or more molecules of the organoborane can be complexed with one molecule of the polyamine.

In a certain embodiment, the amine complexing agent is a primary or secondary monoamine. As such a monoamine, for example, ammonia, ethylamine, butylamine, hexylamine, octylamine, benzylamine, morpholine, piperidine, pyrrolidine, and a polyoxyalkylene monoamine (for example, JEFFAMINE (registered trademark) M715 and M2005; Huntsman PetroChemical Corp., Vermont, TX, United States) can be mentioned.

In another embodiment, the amine complexing agent is a polyamine. As such a polyamine, an alkane diamine for example, 1,2-ethane diamine, 1,3-propane diamine, 1,5-penta diamine, 1,6-hexane diamine, 1,12-dodecane diamine, 2-methyl-1,5-pentane diamine, or 3-methyl-1,5-pentane diamine; an alkyl polyamine for example, triethylene tetraamine or diethylene triamine; for example, polyethylene oxide diamine, polypropylene oxide diamine, polypropylene oxide triamine, diethylene glycol dipropylamine, triethylene glycol dipropylamine, polytetramethylene oxide diamine, poly(ethylene oxide-co-propylene oxide) diamine, or poly(ethylene oxide-co-propylene oxide-propylene oxide) triamine; and isomers thereof can be mentioned.

As the amidine complexing agent, for example, one described in WO 01/32717 can be used. As such an amidine

complexing agent, for example, N,N,N',N'-tetramethyl guanidine, 1,8-diazabicyclo[5.4.0]undeca-7-ene, 1,5-diazabicyclo[4.3.0]nona-5-ene, 2-methyl imidazole, 2-methyl imidazoline, and 4-(N,N-dimethylamino)pyridine can be mentioned.

As the hydroxide complexing agent and the alkoxide complexing agent, for example, those described in WO 01/32716 can be used. As such a hydroxide complexing agent and alkoxide complexing agent, for example, one represented by the following general formula can be mentioned: $M^{m+}(R^4O^-)_n$ (in the formula, $R^4$ is selected independently from hydrogen or an organic group [for example, an alkyl group or an alkylene group], $M^{m+}$ represents a counter cation [for example, a sodium ion, a potassium ion, tetraalkyl ammonium, or a combination thereof], m is an integer no less than 1, and n is an integer no less than 1).

The organoborane complex can be prepared easily using a known technique. Generally, the complexing agent is mixed with the organoborane while stirring in an inert atmosphere. Because heat generation is often observed, it is desirable to cool the mixture and/or slowly add the organoborane to the complexing agent. In a situation where a vapor pressure of the components is high, it is desirable to maintain a reaction temperature lower than about 70°C to 80°C. The complex is cooled to room temperature after sufficiently mixing the materials. While special preservation conditions are not necessary, the complex is preferably preserved in a sealed container in a cold and dark place.

The organoborane is used in an amount effective for the polymerizable monomer of the main agent to generate a polymer of a desired polymerization degree and the cured material of the adhesive to have desired characteristics. When the amount of the organoborane is too small, polymerization may not progress completely and an adhesion of the cured material of the adhesive may become insufficient. Meanwhile, when the amount of the organoborane is too large, polymerization may progress too rapidly such that a working life necessary for work cannot be ensured or a polymerization degree of the obtained polymer may become low such that a cohesion necessary for adhesion is not obtained.

The usage amount of the organoborane is an amount that is generally about 0.003% by mass or more and about 1.5% by mass or less, preferably about 0.008% by mass or more and about 0.5% by mass or less, and more preferably about 0.01% by mass or more and about 0.3% by mass or less when the organoborane is substituted with boron with reference to a mass where a filler, a non-reactive diluent, and other non-reactive materials are subtracted from a total mass of the adhesive (mass where the main agent and the initiator are totaled). In the present disclosure, "non-reactive" relative to the organoborane is used for a material or component where an extractable hydrogen atom or unsaturated bond is not present.

The % by mass of boron in the adhesive can be calculated by the following formula:

[Formula 1]

$$\frac{(\text{Mass of organoborane in adhesive}) \times (\text{\% by mass of boron in organoborane})}{(\text{Total mass of adhesive not including nonreactive component})}$$

To dissolve or dilute the organoborane complex, the initiator may include an appropriate diluent such as an aziridine compound or a combination thereof. Such a diluent is described in, for example, WO 98/17694. The diluent is not reactive with the organoborane or the organoborane complex and functions as an extender of the organoborane or the organoborane complex.

The aziridine compound used as the diluent has at least one aziridine ring or group where a carbon atom thereof may be optionally substituted by a short-chain alkyl group (for example, an organic group of a carbon number of 1 to about 10, preferably methyl, ethyl, or propyl) so as to form a methyl, ethyl, or propyl aziridine portion. In several embodiments, the aziridine compound is polyaziridine.

As examples of useful, commercially-available polyaziridine, product name CX-100 (obtainable from DSM, Heerlen, Netherlands) and the like can be mentioned.

It is advantageous for the aziridine compound to be dissolvable in the organoborane complex; using such an aziridine compound enables providing of a two-part adhesive that excels in storability. It is advantageous for the aziridine compound to be dissolvable in the monomer included in the main agent; using such an aziridine compound enables easy formation of an even mixture and can improve a workability of the adhesive. A usage amount of the aziridine compound is generally about 50% by mass or less, preferably about 25% by mass or less, and more preferably about 10% by mass or less with reference to the total mass of the adhesive. A corresponding amount (for example, about 75% by mass or more, about 100% by mass at most) of the organoborane complex may be dissolved in the aziridine compound.

In a situation of including the organoborane complex in the initiator, the main agent further includes a decomplexing agent. In the present disclosure, "decomplexing agent" signifies a compound that can dissociate an organoborane from a complexing agent by reacting with an amino group, an amidine group, a hydroxide group, or an alkoxide group

in the complexing agent. By the decomplexing agent, reaction of the polymerizable monomer included in the main agent can be initiated.

In a situation where the organoborane complexes with the amine complexing agent, a suitable decomplexing agent is an amine-reactive compound. As general types of useful amine-reactive compounds, an acid, an acid anhydride, an aldehyde, and a β-ketone compound can be mentioned. As the amine-reactive compound, an isocyanate, an acid chloride, sulfonyl chloride, or the like for example, isophorone diisocyanate, toluene diisocyanate, methacryloyl chloride, or the like can also be used.

As useful acids, a Lewis acid (for example, $SnCl_4$, $TiCl_4$, or the like) and a Bronsted acid (for example, an aliphatic carboxylic acid having a linear or branched and saturated or unsaturated alkyl group of a carbon number of 1 to about 8 or an aromatic carboxylic acid having a substituted or nonsubstituted aromatic ring of a carbon number of 6 to 10 for example, acrylic acid, methacrylic acid, acetic acid, benzoic acid, or p-methoxy benzoic acid; hydrochloric acid; sulfuric acid; phosphoric acid; phosphonic acid; phosphinic acid; silicic acid; or the like) can be mentioned. A dicarboxylic acid such as oxalic acid, malonic acid, succinic acid, glutaric acid, adipic acid, maleic acid, fumaric acid, phthalic acid, isophthalic acid, or terephthalic acid or a carboxylic acid ester such as 1,2-ethylene bis maleate, 1,2-propylene bis maleate, 2,2'-diethylene glycol bis maleate, 2,2'-dipropylene glycol bis maleate, or trimethylol propane trimaleate can also be used.

As the amine-reactive compound, a chain or annular acid anhydride can also be used. When a free-radical-polymerizable group for example, an ethylenically-unsaturated group is present in the acid anhydride, copolymerization with the polymerizable monomer included in the main agent may be possible. As useful acid anhydrides, for example, acetic anhydride, propionic anhydride, succinic anhydride, maleic anhydride, phthalic anhydride, and the like can be mentioned.

As useful aldehydes, for example, benzaldehyde; o-, m-, or p-nitrobenzaldehyde; 2,4-dichlorobenzaldehyde; p-tolylaldehyde; 3-methoxy-4-hydroxybenzaldehyde; and the like can be mentioned. An aldehyde blocked by acetal or the like can also be used.

As a useful β-ketone compound, for example, one described in WO 2003/057743 can be used. As such a β-ketone compound, methyl acetoacetate, ethyl acetoacetate, t-butyl acetoacetate, 2-methacryloyl oxyethyl acetoacetate, diethylene glycol bis (acetoacetate), polycaprolactone tris (acetoacetate), polypropylene glycol bis (acetoacetate), poly(styrene-co-allylacetoacetae), N,N-dimethyl acetoacetamide, N-methyl acetoacetamide, acetoacetanilide, ethylene bis (acetoacetamide), propylene glycol bis (acetoacetamide), acetoacetamide, acetoacetonitrile, or the like can be used.

The decomplexing agent is used in an effective amount, that is, an amount that is effective in dissociating the organoborane from the complexing agent and promoting polymerization but substantially does not affect desired characteristics of the cured material of the adhesive. As understood by persons skilled in the art, when the usage amount of the decomplexing agent is too large, polymerization may progress too rapidly such that the working life necessary for work cannot be ensured or the polymerization degree of the obtained polymer may become low such that the cohesion necessary for adhesion is not obtained. Meanwhile, when the usage amount of the decomplexing agent is too small, polymerization may not progress completely and an adhesion of the cured material of the adhesive may become insufficient. The decomplexing agent is generally used in an amount where a mole ratio between an amine-reactive group, an amidine-reactive group, a hydroxide-reactive group, or an alkoxide-reactive group in the decomplexing agent and an amino group, an amidine group, a hydroxide group, or an alkoxide group in the complexing agent is in a range of 0.1:1.0 to 10.0:1.0 and preferably used in an amount where the mole ratio between the amine-reactive group, the amidine-reactive group, the hydroxide-reactive group, or the alkoxide-reactive group in the decomplexing agent and the amino group, the amidine group, the hydroxide group, or the alkoxide group in the complexing agent is in a range of 0.2:1.0 to 4.0:1.0 or about 1.0:1.0.

The main agent and/or the initiator may include at least one type of metal salt that can adjust a curing dynamic of the adhesive to provide a suitable balance between working life and polymerization rate.

As metal cations of the metal salt, for example, cations of vanadium, chromium, manganese, iron, cobalt, nickel, copper, molybdenum, ruthenium, rhodium, palladium, antimony, platinum, and cerium can be mentioned. Among the metal cations, the cations of vanadium, chromium, manganese, iron, cobalt, nickel, copper, ruthenium, palladium, and antimony are preferable; the cations of manganese, iron, cobalt, and copper are preferable and the cations of copper and iron are more preferable for low cost, high activity, and favorable hydrolytic stability. The metal cation may have a σ-eletron-donating ligand such as water, ammonia, or an amine or a π-electron-donating ligand such as an isonitrile, a phosphine, a phosphite, an arsine, nitrosyl (nitric oxide), or ethylene.

As counter ions (anions) of the metal salt, for example, a halide ion, a borate ion, a sulfonate ion, and a carboxylate ion can be mentioned; a chloride ion, a bromide ion, a tetrafluoroborate ion, a trifluoromethane sulfonate ion, a naphthenate ion, and a 2-ethylhexanoic ion are preferable.

As examples of a suitable metal salt, copper (II) bromide, copper (II) chloride, copper (II) 2-ethylhexanoate, iron (III) bromide, vanadium (III) bromide, chromium (III) bromide, ruthenium (III) bromide, copper (II) tetrafluoroborate, copper (II) trifluoromethane sulfonate, copper (II) naphthenate, copper (I) bromide, iron (II) bromide, manganese (II)

bromide, cobalt (II) bromide, nickel (II) bromide, antimony (III) bromide, and palladium (II) bromide can be mentioned.

The metal salt is used in an effective amount, that is, an amount that affects the curing dynamic of the adhesive but substantially does not affect the desired characteristics of the cured material of the adhesive. The metal salt is generally about 40,000 ppm at most, preferably about 60 ppm or more and about 20,000 ppm or less, and further preferably about 100 ppm or more and about 4,000 ppm or less with reference to the total mass of the adhesive. It is advantageous for the metal salt to be soluble in the main agent or dissolve at least partially in the adhesive being used.

The two-part adhesive according to the present disclosure may further include any additive. Such an additive is generally added to the main agent but can also be added to the initiator as long as a function of the initiator is not impaired.

One useful additive is a thickener such as polybutyl methacrylate of a molecular weight of about 10,000 to about 40,000. By using a thickener, a viscosity of the adhesive can be increased to a consistency of a viscous syrup that excels in coatability. Such a thickener can generally be used in an amount of about 50% by mass or less relative to the total mass of the adhesive.

Another useful additive is an elastomer material. An elastomer material can improve a fracture toughness of the cured material of the adhesive. For example, an advantage may be had when adhering a rigid high-yield-strength material (for example, a metal substrate, which does not mechanically absorb energy as easily as other materials such as a flexible polymeric substrate). Such an additive can generally be used in an amount of about 50% by mass or less relative to the total mass of the adhesive.

The coatability and flow characteristics of the adhesive can also be improved by using a core-shell polymer. The improved coatability and flow characteristics can be confirmed by reduction of an undesired string remaining when the adhesive is distributed from a coater of a syringe type or sagging after the adhesive is applied on a perpendicular surface. The core-shell polymer can generally be added in an amount of about 5% by mass or more, about 10% by mass or more, or about 20% by mass or more and about 50% by mass or less, about 40% by mass or less, or about 30% by mass or less relative to the total mass of the adhesive.

A non-reactive diluent may be added to the main agent and/or the initiator. As suitable non-reactive diluents, a 1,4-dioxo-2-butane functional compound such as is described in US Patent 6,252,023 and an aziridine compound such as is described in US Patent 5,935,711 can be mentioned.

A vinyl aromatic compound such as is described in WO 01/68783 can be added to the initiator and/or the main agent to increase the working life of the adhesive without substantially affecting a polymerization rate, a curing time, and the desired characteristics of the cured material of the adhesive.

As a useful vinyl aromatic compound, for example, an $\alpha$-methylstyrene-group-containing oligomer prepared by reacting 3-isopropenyl-$\alpha$,$\alpha$-dimethylbenzyl isocyanate (obtainable as product name "TMI" from Cytec Industries, Inc., Woodland Park, NJ, United States) with a monofunctional or multifunctional reactive hydrogen compound preferably a monofunctional or multifunctional amine or alcohol or a combination thereof can be mentioned. As a particularly preferable monofunctional or multifunctional amine, an amine-terminated polyether commercially available as product name JEFFAMINE obtainable from Huntsman PetroChemical Corp., Vermont, TX, United States for example, JEFFAMINE (trademark) ED600 (diamine-terminated polyether of nominal molecular weight of 600), JEFFAMINE (trademark) D400 (diamine-terminated polyether of nominal molecular weight of 400), JEFFAMINE (trademark) D2000 (diamine-terminated polyether having nominal molecular weight of 2,000), JEFFAMINE (trademark) T3000 (triamine-terminated polyether of nominal molecular weight of 3,000), or JEFFAMINE (trademark) M2005 (monoamine-terminated polyether of nominal molecular weight of 2,000) can be mentioned. As suitable alcohol-containing compounds, for example, polypropylene glycol, polycaprolactone triol, and diethylene glycol can be mentioned. The vinyl aromatic compound can generally be added in an amount of about 1% by mass or more, about 2% by mass or more, or about 5% by mass or more and about 30% by mass or less, about 20% by mass or less, or about 10% by mass or less relative to the total mass of the adhesive.

A small amount of an inhibitor such as hydroquinone monomethyl ether or a tris (N-nitroso-N-phenyl hydroxylamine) aluminum salt can be added to the main agent to, for example, prevent or reduce degradation of the polymerizable monomer in storage. The inhibitor can be added in an amount that essentially does not decrease the polymerization rate of the monomer or the desired characteristics of the cured material of the adhesive. The inhibitor can generally be used in an amount of about 100 ppm or more and about 10,000 ppm or less with reference to the mass of the polymerizable component.

As other optional additives, a non-reactive diluent or solvent (for example, acetone, methylethyl ketone, ethyl acetate, N-methyl caprolactam, or the like), a non-reactive colorant, a filler (for example, carbon black, hollow glass/ceramic beads, silica, titanium dioxide, solid glass/ceramic microspheres, silica alumina ceramic microspheres, electrically-conductive and/or thermally-conductive particles, an antistatic compound, chalk, or the like), and the like can be mentioned. The various optical additives can be added in an amount that essentially does not decrease the polymerization rate of the monomer or the desired characteristics of the cured material of the adhesive.

The two-part adhesive of the present disclosure is particularly useful in a situation of adhering a low-surface-energy plastic or polymer substrate that is a poorly-adhesive material without using a complex surface treatment technique such as a flame treatment, an ITRO treatment, a corona discharge, or a primer treatment. "Low surface energy" in the

present disclosure is used in relation to a material whose surface energy is less than 45 $mJ/m^2$ more typically, less than 40 $mJ/m^2$ or less than 35 $mJ/m^2$. As such a material, an olefin material such as polyethylene (PE) or polypropylene (PP); a silicone rubber such as acrylonitrile-butadiene-styrene (ABS), dimethyl silicone rubber, vinylmethyl silicone rubber, or phenylmethyl silicone rubber; a fluororesin such as polytetrafluoroethylene (PTFE); an elastomer-modified body of these materials; and a polymer blend of these materials and an elastomer such as ethylene-propylene rubber (EPM) or ethylene-propylene-diene rubber (EPDM) can be mentioned. As other polymers of a comparative high surface energy where the two-part adhesive of the present disclosure can be used, polycarbonate (PC), polymethyl methacrylate (PMMA), and polyvinyl chloride (PVC) can be mentioned. The two-part adhesive of the present disclosure can be used particularly advantageously in an adhesion usage where at least one of the substrates is a silicone rubber substrate.

The main agent and the initiator of the two-part adhesive of the present invention are mixed as is normally done in a situation of handling such materials. A portion or an entirety of the two-part adhesive of the present disclosure is mixed before applying the adhesive to the substrate.

In a situation where the two-part adhesive is used in a commercial and industrial environment, a ratio at which the main agent and the initiator are mixed being a simple integer is advantageous in facilitating application of the adhesive using a conventional commercially-available supply device. As such a supply device, a double-syringe-type applicator such as is described in US Patents 4,538,920 and 5,082,147 for example, product name "MIXPAC" (obtainable from ConProTec, Inc., Salem, NH, United States) can be used.

Normally, the supply device is provided with a set of tubular containers disposed lined up and is designed so each tube respectively receives the main agent or the initiator of the adhesive. Two plungers, one for each tube, are moved simultaneously (for example, moved manually or using a manual gear mechanism), and the contents of the tubes are sent to a common elongated mixing chamber. The mixing chamber may be provided with a static mixer for promoting mixing of the two parts. The mixed adhesive is supplied on the substrate from the mixing chamber. When the tubes become empty, an application step can be continued by switching these out with new tubes.

The ratio at which the main agent and the initiator of the adhesive are mixed can be adjusted by diameters of the tubes. At this time, each plunger has a dimension conforming to an interior of the tube, which is of a constant diameter, and the plungers move in the tubes at the same speed. The supply device is often intended for use with various different two-part adhesives, and the plungers have dimensions that supply the main agent and the initiator of the adhesive at a suitable mixing ratio. In several embodiments, a mixing ratio of the main agent and the initiator is generally 1:1, 2:1, 4:1, or 10:1.

In a situation where the main agent and the initiator of the adhesive are mixed at a mixing ratio of a fraction (for example, 100:3.5), a user comes to manually weigh the two parts of the adhesive. Because of this, the two parts of the adhesive being mixable at a general integer mixing ratio such as 10:1 or less and more preferably 4:1, 3:1, 2:1, or 1:1 is advantageous in increasing commercial and industrial usefulness of the adhesive and facilitating use of supply devices that are currently available. The vinyl aromatic compound already described can be added advantageously to the initiator with an object of adjusting the mixing ratio of the two parts of the adhesive to an integer mixing ratio (for example, 20:1, 15:1, 12:1, 10:1, 4:1, 3:1, 2:1, or 1:1).

After the two parts are mixed, it is preferable for the adhesive to be used within the working life of the adhesive. The adhesive is applied on one or both substrates; next, pressure is applied to the substrates to join the substrates to each other, and excess adhesive is pushed out from a bond line. In doing so, adhesive exposed to air and having a possibility of curing progressing excessively can also be removed. Generally, adhesion is performed in a short time after the adhesive is applied to the substrate and is preferably performed within the working life of the adhesive. A thickness of the adhesive is generally about 0.01 mm or more and about 0.3 mm or less but may exceed 1.0 mm in a situation where a gap between the substrates needs to be filled. An adhesion step can be easily implemented at room temperature; as necessary, the adhesive can also be post-cured at a high temperature.

As an embodiment using the two-part adhesive of the present disclosure, provided for example is a structure 10 such as is illustrated in FIG.1 that includes a first silicone rubber substrate 12, a second substrate 16, and a cured material 14 of the two-part adhesive, wherein the first silicone rubber substrate 12 and the second substrate 16 are joined via the cured material 14 of the two-part adhesive. In several embodiments, the second substrate includes a silicone rubber, a fluororesin, or a metal. According to these embodiments, a structure where silicone rubber substrates, which are poorly-adhesive materials, are joined to each other or a silicone rubber substrate and a fluororesin substrate are joined can be obtained without using an adhesive including a special material such as an acrylic-modified silicone resin or a fluororesin.

EXAMPLES

In the following examples, specific examples of the present disclosure are illustrated; however, the present invention is not limited thereto. All parts and percentages are by mass unless noted otherwise.

Reagents and raw materials used in the present example are indicated in table 1 below.

Table 1

| Product Name or Abbr | Description | Supplier |
| --- | --- | --- |
| K-125 | Silicone rubber (1100 mm × w 25 mm × t 3 mm) | Togawa Rubber Co., Ltd. (Osaka-shi. Osaka. Japan) |
| TMI | 3-isopropenyl-α,α-dimethylbenzyl isocyanate | Cytec Industries. Inc. (Woodland Park. NJ. United States) |
| JEFFAMINE D2000 (trademark) | Diamine-terminated polypropylene glycol nominal molecular wt. 2.000 | Huntsman Petrochemical Corp. (Vermont. TX. United States) |
| CX-100 | Trimethylol propane tris (3-(2-methyl aziridine)) propionate<br>Carbon black | DSM (Heerlen. Netherlands)<br>Cabot Corp. (Boston. MA. United States) |
| M460 | Silane-treated fumed silica | Cabot Corp. (Boston. MA. United States) |
| CAB-O-SIL TS720 (trademark) | Phenoxyethyl methacrylate | Mitsubishi Rayon Co.. Ltd. (Chiyoda-ku. Tokyo. Japan) |
| PhEMA | Tetrahydrofurfuryl methacrylate | Sartomer Company (Exton. PA. United States) |
| THFMA | Cyclohexyl methacrylate | Mitsubishi Rayon Co., Ltd. (Chiyoda-ku. Tokyo. Japan) |
| CHMA | Benzyl methacrylate | Mitsubishi Rayon Co., Ltd. (Chiyoda-ku.Tokyo. Japan) |
| BZMA | Isobornyl methacrylate | Mitsubishi Rayon Co., Ltd. (Chiyoda-ku. Tokyo. Japan) |
| IBXVA | 2-hydroxyethyl methacrylate | Mitsubishi Rayon Co., Ltd. (Chiyoda-ku. Tokyo. Japan) |
| HEMA | Dimethyl acrylamide | KJ Chemicals Corp. ( Chuo-ku Tokyo, Japan) |
| DMAA | Succinic anhydride | DSM (Heerlen. Netherlands) |
| SA | Copper (II) bromide | Nihon Kagaku Sangyo Co., Ltd. (Daito-ku. Tokyo. Japan) |
| $CuBr_2$ | N-methyl caprolactam | Wako Pure Chemical Industries. Ltd (Osaka-shi Oska Japan) |
| NMC | Core-shell polymer. rubber modifier | Kaneka Corporation (Osaka-shi. Osaka. Japan) |
| Kaneace (reg. trademark) B564 | Silica alumina ceramic microspheres | Envirospheres (Lindfield.NSW.Australia) |
| E-Sphere SL300 | Titanium dioxide | Ishihara Sangyo Kaisha, Ltd. (Osaka-shi. Osaka. Japan) |
| CR60 | Polyurethane acrylate | The Nippon Synthetic Chemical Industry Co., Ltd (Osaka-shi Osaka. Japan) |
| UV3300B | | |

<Adhesive Evaluation Method Peeling Test>

An adhesive composition is prepared by mixing the main agent and the initiator of the two-part adhesive, and the obtained adhesive composition is directly coated on a silicone rubber test piece (K-125) that is not surface treated. Immediately thereafter, the adhesive composition is made to cover another silicone rubber test piece that is not surface treated so a covering region becomes 1 cm × 2 cm at a thickness of 1 mm. The adhesive is aged for 1 day at a predetermined temperature (10°C, 15°C, 20°C, 25°C, 30°C, and 35°C) to be cured. Using the tensile tester RTC-1325A (A&D Company, Ltd., Toshima-ku, Tokyo, Japan), a peeling force of when the adhesion test piece is peeled in a 180-degree direction (T-peeling) at a temperature of 23°C and a cross-head speed of 5 cm/min. is recorded in kN/m, and a fracture mode is confirmed by visual observation of the test piece after peeling.

<Examples 1 to 5 and Comparative Examples 1 to 13>

<Synthesis of α-Methylstyrene-Group-Containing Oligomer (AMSPU)>

120.60 g of TMI and 600.00 g of JEFFAMINE (trademark) D2000 are mixed and made to react for one day and night at room temperature without temperature adjustment. As a result of IR spectrophotometry, it is confirmed that the reaction is concluded from a peak due to isocyanate of a wave number of 2,265 $cm^{-1}$ having disappeared. In this manner, the α-methylstyrene-group-containing oligomer (AMSPU) is obtained.

<Initiator>

Materials used for the initiator are indicated in table 1. A 35% CX-100 solution of triethyl borane : a 1,6-hexamethylene diamine complex (TEB/HMDA/CX-100) is prepared by dissolving triethyl borane : a 1,6-hexane diamine complex whose mole ratio is 2:1 in CX-100 so a concentration becomes 35% by mass. 33.90 g of TEB/HMDA/CX-100, 62.30 g of AMSPU, 3.60 g of TS 720, and 0.20 g of M 460 are weighed in a 200-mL glass bottle and stirred for 2 minutes at 2,000 rpm using "Awatori rentarō" ARE-500 (rotation-revolution mixer, Thinky Corporation, Chiyoda-ku, Tokyo, Japan) to obtain the initiator. The obtained initiator is used in examples 1 to 5 and comparative examples 1 to 13.

<Main Agent>

Materials used for the main agent are indicated in table 1. Compositions of the main agent of examples 1 to 5 and comparative examples 1 to 13 are indicated in table 2. A 25% NMC solution of copper (II) bromide ($CuBr_2$/NMC) is prepared by dissolving copper (II) bromide in NMC so a concentration becomes 25% by mass. Each component is weighed into a 200-mL glass bottle so a total mass of the main agent becomes 100 g and, after leaving this standing for 20 minutes at 70°C, stirred for 2 minutes at 2,000 rpm using "Awatori rentarō" ARE-500 (rotation-revolution mixer, Thinky Corporation, Chiyoda-ku, Tokyo, Japan) to obtain the main agent.

Table 2-1

| | 1 | 2 | 3 | 4 | 5 | 1 |
|---|---|---|---|---|---|---|
| PhEMA | 64.82 | 61.41 | 54.58 | 47.76 | 40.94 | 34.12 |
| THFMA | 3.41 | 6.82 | 13.65 | 20.47 | 27.29 | 34.12 |
| CHMA | 0.00 | 0.00 | 0.00 | 0.00 | 0.00 | 0.00 |
| BZMA | 0.00 | 0.00 | 0.00 | 0.00 | 0.00 | 0.00 |
| IBXMA | 0.00 | 0.00 | 0.00 | 0.00 | 0.00 | 0.00 |
| DMAA | 0.00 | 0.00 | 0.00 | 0.00 | 0.00 | 0.00 |
| HEMA | 0.00 | 0.00 | 0.00 | 0.00 | 0.00 | 0.00 |
| SA | 0.62 | 0.62 | 0.62 | 0.62 | 0.62 | 0.62 |
| $CuBr_2$/NMC | 0.80 | 0.80 | 0.80 | 0.80 | 0.80 | 0.80 |
| B564 | 25.00 | 25.00 | 0.00 | 25.00 | 25.00 | 25.00 |
| UV3300B | 2.37 | 2.37 | 2.37 | 2.37 | 2.37 | 2.37 |
| TS720 | 0.00 | 0.00 | 0.00 | 0.00 | 0.00 | 0.00 |
| SL300 | 1.98 | 1.98 | 1.98 | 1.98 | 1.98 | 1.98 |
| CR60 | 1.00 | 1.00 | 1.00 | 1.00 | 1.00 | 1.00 |
| | 100.0 | 100.0 | 100.0 | 100.0 | 100.0 | 100.0 |

Table 2-2

| | 2 | 3 | 4 | 5 | 6 | 7 |
|---|---|---|---|---|---|---|
| PhEMA | 27.29 | 20.47 | 13.65 | 0.00 | 68.23 | 0.00 |
| THFMA | 40.94 | 47.76 | 54.58 | 68.23 | 0.00 | 0.00 |
| CHMA | 0.00 | 0.00 | 0.00 | 0.00 | 0.00 | 68.23 |
| BZMA | 0.00 | 0.00 | 0.00 | 0.00 | 0.00 | 0.00 |
| IBXMA | 0.00 | 0.00 | 0.00 | 0.00 | 0.00 | 0.00 |
| DMAA | 0.00 | 0.00 | 0.00 | 0.00 | 0.00 | 0.00 |
| HEMA SA | 0.00 | 0.00 | 0.00 | 0.00 | 0.00 | 0.00 |
| | 0.62 | 0.62 | 0.62 | 0.62 | 0.62 | 0.62 |
| $CuBr_2$/NMC | 0.80 | 0.80 | 0.80 | 0.80 | 0.80 | 0.80 |
| B564 | 25.00 | 25.00 | 25.00 | 25.00 | 25.00 | 25.00 |
| UV3300B | 2.37 | 2.37 | 2.37 | 2.37 | 2.37 | 2.37 |
| TS720 | 0.00 | 0.00 | 0.00 | 0.00 | 0.00 | 0.00 |
| SL300 | 1.98 | 1.98 | 1.98 | 1.98 | 1.98 | 1.98 |
| CR60 | 1.00 | 1.00 | 1.00 | 1.00 | 1.00 | 1.00 |
| | 100.0 | 100.0 | 100.0 | 100.0 | 100.0 | 100.0 |

Table 2-3

| | 8 | 9 | 10 | 11 | 12 | 13 |
|---|---|---|---|---|---|---|
| PhEMA | 0.00 | 0.00 | 0.00 | 0.00 | 33.12 | 34.12 |
| THFMA | 0.00 | 0.00 | 0.00 | 0.00 | 0.00 | 0.00 |
| CHMA | 0.00 | 0.00 | 0.00 | 0.00 | 0.00 | 0.00 |
| BZMA | 68.23 | 0.00 | 0.00 | 0.00 | 0.00 | 0.00 |
| IBXMA | 0.00 | 68.23 | 0.00 | 0.00 | 0.00 | 34.12 |
| DMAA | 0.00 | 0.00 | 68.23 | 0.00 | 0.00 | 0.00 |
| HEMA | 0.00 | 0.00 | 0.00 | 59.48 | 33.12 | 0.00 |
| SA | 0.62 | 0.62 | 0.62 | 0.62 | 0.62 | 0.62 |
| $CuBr_2$/NMC | 0.80 | 0.80 | 0.80 | 0.80 | 0.80 | 0.80 |
| B564 | 25.00 | 25.00 | 25.00 | 31.25 | 25.00 | 25.00 |
| UV3300B | 2.37 | 2.37 | 2.37 | 2.37 | 2.37 | 2.37 |
| TS720 | 0.00 | 0.00 | 0.00 | 2.50 | 2.00 | 0.00 |
| SL300 | 1.98 | 1.98 | 1.98 | 1.98 | 1.98 | 1.98 |
| CR60 | 1.00 | 1.00 | 1.00 | 1.00 | 1.00 | 1.00 |
| | 100.0 | 100.0 | 100.0 | 100.0 | 100.0 | 100.0 |

Characteristics of the monomers and mixtures thereof used in examples 1 to 5 and comparative examples 1 to 13 are indicated in table 3. In relation to a glass transition temperature, in a situation where the monomer is a single component, described is a glass transition temperature of a homopolymer thereof; for a monomer mixture, described is a value sought by FOX's formula below as a copolymer of n types of monomers:

[Formula 2]

$$1/Tg = X_1/(Tg_1 + 273.15) + X_2/(Tg_2 + 273.15) + \cdots + X_n/(Tg_n + 273.15)$$

($Tg_1$ : Glass transition temperature of homopolymer of component 1
$Tg_2$ : Glass transition temperature of homopolymer of component 2
...
$Tg_n$ : Glass transition temperature of homopolymer of component n
$X_1$ : Mass fraction of monomer of component 1 added when polymerizing
$X_2$ : Mass fraction of monomer of component 2 added when polymerizing
• • •
$X_n$ : Mass fraction of monomer of component n added when polymerizing
$X_1 + X_2 + \cdots + X_n = 1$)

In relation to a boiling point, in the situation where the monomer is a single component, described is a boiling point thereof; in a situation of a monomer mixture, described is a value sought according to the following formula: $BP_{blend} = \Sigma(X_n \cdot BP_n)$ (in the formula, $BP_{blend}$ is a boiling point of the monomer mixture, $X_n$ is a mass fraction of an individual monomer relative to the total mass of the monomer mixture, and $BP_n$ is a boiling point of this individual monomer).

Table 3

| | Fluoro-philicity | Glass Trans. Temp. (°C) | Boiling pt (°C) | Monomer Compounding Ratio |
|---|---|---|---|---|
| PhEMA | 0 | 54 | 270 | - |
| THFMA | 3 | 60 | 225 | - |
| CHMA | 4 | 66 | 210 | - |
| BZMA | 1 | 54 | 230 | - |
| IBXMA | 3 | 110 | 255 | - |
| DMAA | - | - | - | - |
| HEMA | 0 | 55 | 220 | - |
| Ex.1 | 0.2 | 54 | 268 | PhEMA : THFMA=95 : 5 |
| Ex.2 | 0.3 | 55 | 266 | PhEMA : THFMA=90 : 10 |
| Ex.3 | 0.6 | 55 | 261 | PhEMA : THFMA=80 : 20 |
| Ex.4 | 0.9 | 56 | 257 | PhEMA : THFMA=70 : 30 |
| Ex.5 | 1.2 | 56 | 252 | PhEMA : THFMA=60 : 40 |
| comp.Ex.1 | 1.5 | 57 | 248 | PhEMA : THFMA=50 : 50 |
| Comp.Ex.2 | 1.8 | 58 | 243 | PhEMA : THFMA=40: 60 |
| Comp.Ex.3 | 2.1 | 58 | 239 | PhEMA : THFMA=30 : 70 |
| Comp.Ex.4 | 2.4 | 59 | 234 | PhEMA : THFMA=20 : 80 |
| Comp.Ex.5 | 3 | 60 | 225 | THFMA=100 |
| Comp.Ex.6 | 0 | 54 | 270 | PhEMA=100 |
| Comp.Ex.7 | 4 | 66 | 210 | CHMA = 100 |
| Comp.Ex.8 | 1 | 54 | 230 | BZMA=100 |
| Comp.Ex.9 | 3 | 110 | 255 | IBXMA=100 |
| comp.Ex. 10 | - | - | - | DMAA=100 |
| Comp.Ex. 11 | 0 | 55 | 220 | HEMA=100 |

(continued)

| | Fluoro-philicity | Glass Trans. Temp. (°C) | Boiling pt (°C) | Monomer Compounding Ratio |
|---|---|---|---|---|
| Comp.Ex. 12 | 0 | 54 | 245 | PhEMA : HEMA=50 : 50 |
| Comp.Ex. 13 | 1.5 | 80 | 263 | PhEMA : IBXMA=50 : 50 |

<Adhesive>

Coating of the adhesive mixed in a static mix nozzle is performed by, after filling the initiator on a volume-ratio-1 side and the main agent on a volume-ratio-10 side of a dual syringe applicator of a volume ratio of 10:1 (Mixpack CD050-10-PP, ADY Ltd., Osaka-shi, Osaka, Japan), mounting a seventeen-stage static mix nozzle of a length of 10 cm (MX5.4-17-S, ADY Ltd., Osaka-shi, Osaka, Japan) and simultaneously pushing out the main agent and the initiator. Evaluation results of the cured material of the adhesive according to the peeling test are indicated in table 4.

[Table 4]

| | Peeling Force (kN/m) / Fracture Mode[1) | | | | | |
|---|---|---|---|---|---|---|
| Aging Temp. | 10°C | 15°C | 20°C | 25°C | 30 °C | 35°C |
| Ex.1 | 0.0/AF | 2.0/SF | 2.5/SF | 2.8/SF | 3.1/SF | 1.6/AF |
| Ex.2 | 0.0/AF | 2.6/SF | 2.7/SF | 2.8/SF | 3.7/SF | 2.0/AF |
| Ex.3 | 0.0/AF | 2.7/SF | 3.2/SF | 2.9/SF | 2.5/SF | 1.3/AF |
| Ex.4 | 0.0/AF | 3.4/SF | 3.2/SF | 3.0/SF | 2.1/AF | 0.8/AF |
| Ex.5 | 0.0/AF | 2.0/SF | 2.9/SF | 2.9/SF | 1.4/AF | 0.0/AF |
| Comp.Ex.1 | 0.0/AF | 2.8/SF | 3.0/SF | 1.3/AF | 0.0/AF | 0.0/AF |
| Comp.Ex.2 | 0.0/AF | 2.5/SF | 3.0/SF | 0.8/AF | 0.0/AF | 0.0/AF |
| Comp.Ex.3 | 0.0/AF | 2.8/SF | 2.0/SF | 0.0/AF | 0.0/AF | 0.0/AF |
| Comp.Ex.4 | 0.0/AF | 2.8/SF | 1.2/AF | 0.0/AF | 0.0/AF | 0.0/AF |
| Comp.Ex.5 | 0.0/AF | 0.8/AF | 0.0/AF | 0.0/AF | 0.0/AF | 0.0/AF |
| Comp.Ex.6 | 0.0/AF | 0.0/AF | 2.8/SF | 2.8/SF | 2.8/SF | 2.3/AF |
| Comp.Ex.7 | 0.0/AF | 0.0/AF | 0.0/AF | 0.0/AF | 0.5/AF | 0.7/AF |
| Comp.Ex.8 | 0.0/AF | 0.0/AF | 0.0/AF | 0.0/AF | 0.0/AF | 0.0/AF |
| Comp.Ex.9 | 0.0/AF | 0.0/AF | 0.0/AF | 0.0/AF | 0.0/AF | 0.0/AF |
| Comp.Ex.10 | 0.0/AF | 0.0/AF | 0.4/AF | 0.3/AF | 0.5/AF | 2.6/SF |
| Comp.Ex.11 | 0.0/AF | 0.0/AF | 0.0/AF | 0.6/AF | 3.0/SF | 3.7/SF |
| Comp.Ex.12 | 0.0/AF | 0.0/AF | 0.0/AF | 0.0/AF | 0.7/AF | 0.8/AF |
| Comp.Ex.13 | 0. 0/AF | 0.0/AF | 0.0/AF | 0.0/AF | 0.0/AF | 0.0/AF |
| 1) SF : Substrate AF : Adhesive fracture (cohesion failure) fracture | | | | | | |

As evident from table 4, the cured material of the adhesive of examples 1 to 5, by exhibiting a peeling force of 2 kN/m or more in conjunction with substrate fracture when adhesion work and aging are performed in a wide temperature range of room temperature (for example, 15°C to 25°C), have a high interfacial adhesive force and cohesion that exceed 2 kN/m.

[Reference Signs List]

10 Structure

12 First silicone rubber substrate

14 Cured material of two-part adhesive

16 Second substrate

## Claims

1. A two-part adhesive comprising:

   a main agent including phenoxyethyl methacrylate and tetrahydrofurfuryl methacrylate; and
   an initiator including an organoborane; wherein
   the main agent includes the phenoxyethyl methacrylate at 60 to 95% by mass with reference to a mass of a polymerizable component.

2. The two-part adhesive according to claim 1, wherein the main agent includes the tetrahydrofurfuryl methacrylate at 5 to 40% by mass with reference to the mass of the polymerizable component.

3. The two-part adhesive according to claim 1 or 2, wherein the main agent includes the phenoxyethyl methacrylate and tetrahydrofurfuryl methacrylate at 95% by mass or more in total with reference to the mass of the polymerizable component.

4. The two-part adhesive according to any of claims 1 to 3, wherein a fluorophilicity of the polymerizable component of the main agent is 0.1 to 1.4, as determined according to the Fluorophilicity Procedure.

5. The two-part adhesive according to any of claims 1 to 4, wherein the main agent does not include a linear or branched alkyl (meth)acrylate where a carbon number of an alkyl moiety is 5 or more.

6. Use of the two-part adhesive according to any of claims 1 to 5 in the adhesion of a silicone rubber substrate.

7. A structure, comprising: a first silicone rubber substrate;
   a second substrate; and
   a cured material of the two-part adhesive according to any of claims 1 to 5 ; wherein
   the structure is made by the first silicone rubber substrate and the second substrate being joined via the cured material of the two-part adhesive.

8. The structure according to claim 7, wherein the second substrate includes a silicone rubber, a fluororesin, or a metal.

## Patentansprüche

1. Zweikomponentenkleber, umfassend:

   ein Hauptmittel, einschließlich Phenoxyethylmethacrylat und Tetrahydrofurfurylmethacrylat; und
   einen Initiator, der ein Organoboran einschließt; wobei
   das Hauptmittel das Phenoxyethylmethacrylat zu 60 bis 95 Massenprozent mit Bezug auf eine Masse einer polymerisierbaren Komponente einschließt.

2. Zweikomponentenkleber nach Anspruch 1, wobei das Hauptmittel das Tetrahydrofurfurylmethacrylat zu 5 bis 40 Massenprozent in Bezug auf die Masse der polymerisierbaren Komponente einschließt.

3. Zweikomponentenkleber nach Anspruch 1 oder 2, wobei das Hauptmittel das Phenoxyethylmethacrylat und Tetrahydrofurfurylmethacrylat zu insgesamt 95 Massenprozent oder mehr in Bezug auf die Masse der polymerisierbaren Komponente umfasst.

4. Zweikomponentenkleber nach einem der Ansprüche 1 bis 3, wobei die Fluorophilie der polymerisierbaren Komponente des Hauptmittels 0,1 bis 1,4 beträgt, wie nach dem Fluorophilieverfahren bestimmt.

5. Zweikomponentenkleber nach einem der Ansprüche 1 bis 4, wobei das Hauptmittel kein lineares oder verzweigtes Alkyl(methy)acrylat einschließt, bei dem eine Kohlenstoffanzahl einer Alkyleinheit 5 oder mehr ist.

6. Verwendung des Zweikomponentenklebers nach einem der Ansprüche 1 bis 5 bei der Adhäsion eines Silikonkautschuksubstrats.

7. Struktur, die Folgendes umfasst: ein erstes Silikonkautschuksubstrat;
ein zweites Substrat; und
ein gehärtetes Material des Zweikomponentenklebers nach einem der Ansprüche 1 bis 5; wobei
die Struktur dadurch entsteht, dass das erste Silikonkautschuksubstrat und das zweite Substrat durch das gehärtete Material des Zweikomponentenklebers verbunden werden.

8. Struktur nach Anspruch 7, wobei das zweite Substrat einen Silikonkautschuk, ein Fluorharz oder ein Metall einschließt.

## Revendications

1. Adhésif à deux parties comprenant :

   un agent principal incluant du méthacrylate de phénoxyéthyle et du méthacrylate de tétrahydrofurfuryle ; et un inducteur incluant un organoborane ; dans lequel l'agent principal inclut le méthacrylate de phénoxyéthyle à raison de 60 à 95 % en masse en référence à une masse d'un composant polymérisable.

2. Adhésif à deux parties selon la revendication 1, dans lequel l'agent principal inclut le méthacrylate de tétrahydrofurfuryle à raison de 5 à 40 % en masse en référence à la masse du composant polymérisable.

3. Adhésif à deux parties selon la revendication 1 ou 2, dans lequel l'agent principal inclut le méthacrylate de phénoxyéthyle et le méthacrylate de tétrahydrofurfuryle à raison de 95 % en masse ou plus au total en référence à la masse du composant polymérisable.

4. Adhésif à deux parties selon l'une quelconque des revendications 1 à 3, dans lequel une fluorophilie du composant polymérisable de l'agent principal va de 0,1 à 1,4, telle que déterminée selon la procédure de fluorophilie.

5. Adhésif à deux parties selon l'une quelconque des revendications 1 à 4, dans lequel l'agent principal n'inclut pas de (méth)acrylate d'alkyle linéaire ou ramifié là où un nombre de carbones d'un fragment alkyle vaut 5 ou plus.

6. Utilisation de l'adhésif à deux parties selon l'une quelconque des revendications 1 à 5 dans l'adhésion d'un substrat de caoutchouc de silicone.

7. Structure, comprenant : un premier substrat de caoutchouc de silicone ;
un deuxième substrat ; et
un matériau durci de l'adhésif à deux parties selon l'une quelconque des revendications 1 à 5 ; dans laquelle
la structure est fabriquée par le premier substrat de caoutchouc de silicone et le deuxième substrat étant joints par l'intermédiaire du matériau durci de l'adhésif à deux parties.

8. Structure selon la revendication 7, dans laquelle le deuxième substrat inclut un caoutchouc de silicone, une résine fluorée, ou un métal.

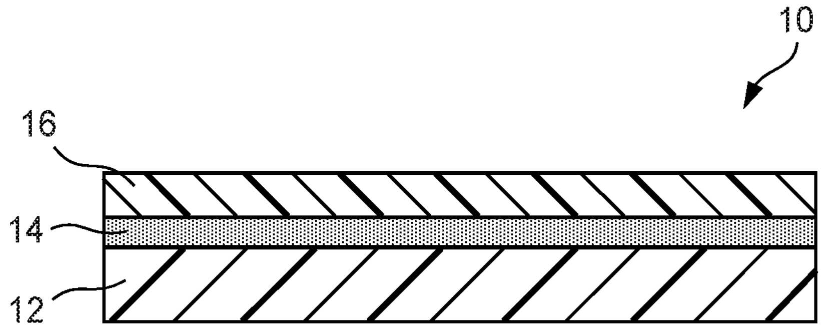


FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002517594 B
- WO 9964528 A
- US 2013267670 A
- WO 2014140138 A
- WO 0132717 A
- WO 0132716 A
- WO 9817694 A
- WO 2003057743 A
- US 6252023 B
- US 5935711 A
- WO 0168783 A
- US 4538920 A
- US 5082147 A